# EUROPÄISCHE PATENTSCHRIFT

(11) **EP 4 137 899 B1**
(45) Veröffentlichungstag und Bekanntmachung des Hinweises auf die Patenterteilung: **14.10.2026**
(21) Anmeldenummer: 22188416.6
(22) Anmeldetag: 03.08.2022
(51) Int. Cl.: G05B 19/41, G05B 19/4093

(54) **VERFAHREN ZUM BESTIMMEN EINER BEARBEITUNGSBAHN UND VERFAHREN ZUR BEARBEITUNG EINES WERKSTÜCKS MITTELS EINER MEHRACHSIGEN BEARBEITUNGSMASCHINE**
METHOD FOR DETERMINING A MACHINING PATH AND METHOD FOR MACHINING A WORKPIECE BY MEANS OF A MULTI-AXIS MACHINING DEVICE
PROCÉDÉ DE DÉTERMINATION D'UNE TRAJECTOIRE D'USINAGE ET PROCÉDÉ D'USINAGE D'UNE PIÈCE AU MOYEN D'UNE MACHINE D'USINAGE À AXES MULTIPLES

(30) Priorität: 18.08.2021 DE 102021121398
(43) Veröffentlichungstag der Anmeldung: 22.02.2023
(73) Patentinhaber: OPEN MIND Technologies AG, 82234 Wessling (DE)
(72) Erfinder: Koch, Josef, 81371 München (DE); Brambs, Peter, 80803 München (DE)
(74) Vertreter: Weickert, Jonas

(56) Entgegenhaltungen:
- EP-A1- 3 623 887
- WO-A2-2017/005453

## Beschreibung

Die Erfindung betrifft ein Verfahren, eine Software und ein Computerprogrammprodukt zum Bestimmen einer Bearbeitungsbahn für eine materialabtragende Bearbeitung eines Werkstücks mittels einer mehrachsigen Bearbeitungsmaschine. Die Erfindung betrifft außerdem ein Verfahren zur Bearbeitung eines Werkstücks mittels einer mehrachsigen Bearbeitungsmaschine.

Aus dem Stand der Technik sind mehrachsige Bearbeitungsmaschinen bzw. Bearbeitungssysteme bekannt, mittels derer Werkstücke spanend bearbeitet werden können. Eine gängige Klasse derartiger Bearbeitungsmaschinen sind 5-Achs-Maschinen, bei denen zur Bewegung des Werkzeugs relativ zu einem Werkstück häufig drei lineare Achsen und zwei Drehachsen zur Verfügung stehen. Je nach Anwendung kommen aber auch Maschinen mit einer größeren oder kleineren Anzahl von Achsen zum Einsatz.

Bei der Bearbeitung eines Werkstücks wird das verwendete Werkzeug entlang einer Bearbeitungsbahn geführt. Diese wird computergestützt relativ zum Werkstück berechnet. Dafür werden CAM-Systeme eingesetzt, die aus CAD-Daten, also einem dreidimensionalen Modell des zu fertigenden Objekts, unter Verwendung unterschiedlicher Strategien zur Bahnberechnung eine Bearbeitungsbahn erzeugen können. Die Bearbeitungsbahn setzt sich typischerweise aus mehreren Bahnsegmenten zusammen. Solche Bahnsegmente können Eingriffsbahnsegmente sein, entlang derer sich das Werkzeug mit dem Werkstück zumindest abschnittsweise in Eingriff befindet. An- und Abfahrbewegungen können dabei einem Eingriffsbahnsegment zuzuschlagen sein. Es können auch Bahnsegmente vorhanden sein, die Verbindungsbahnsegmente sind, entlang derer das Werkzeug außer Eingriff mit dem Werkzeug steht. Ein Verbindungsbahnsegment verbindet hierbei typischerweise zwei Eingriffsbahnsegmente miteinander.

Ist eine Bearbeitungsbahn erstellt, wird daraus Maschinencode für die Bearbeitungsmaschine generiert. Dieser Maschinencode definiert die Bewegung der verschiedenen Komponenten der Bearbeitungsmaschine. Dies kann beispielsweise ein Drehen und/oder Schwenken eines Werkstücktisches, ein, insbesondere lineares, Bewegen einer Werkzeugspindel, ein Drehen und/oder Schwenken der Werkzeugspindel und/oder ein, insbesondere lineares, Bewegen des Werkstücktisches, wobei Werkzeugspindel und Werkstücktisch auch gleichzeitig gedreht, geschwenkt und/oder bewegt werden können. Die Aufteilung der unterschiedlichen Maschinenachsen auf unterschiedliche Komponenten der Maschine ist vom Typ der Bearbeitungsmaschine abhängig und kann beliebig sein.

Die Werkzeugwege zweier aufeinanderfolgender Eingriffsbahnsegmente können in einem CAM-System auf unterschiedliche Arten miteinander verbunden werden. Aus DE 10 2013 112 232 B3 ist es bekannt, als Verbindungsbahnsegmente lineare Segmente oder kurvenförmige Segmente zu verwenden. Dabei werden erforderlichenfalls Kollisionen mit Hindernissen vermieden, die zwischen den zu verbindenden Eingriffsbahnsegmenten liegen, indem man das entsprechende Verbindungsbahnsegment zum Beispiel weiter nach oben verlagert oder seine Form anderweitig anpasst.

Bei kurvenförmigen Verbindungsbahnsegmenten werden sowohl die Werkzeugposition - bezogen auf die Werkzeugspitze - als auch gleichzeitig die Orientierung der Werkzeugachse kontinuierlich interpoliert. Das kurvenförmige Verbindungsbahnsegment kann beispielsweise als Spline berechnet werden, so dass ein weicher Verlauf der Bearbeitungsbahn entsteht.

Ein weicher Verlauf von Verbindungsbahnsegmenten liegt dabei aber in einer Betrachtung vor, die vom Werkstück ausgeht. Die Verbindungsbahnsegmente sind in einem Bezugssystem beschrieben, in dem die Position und Orientierung des Werkstücks unverändert ist. In der realen Maschine bewegen sich während der Bearbeitung hingegen der Werkzeugtisch und die Bearbeitungsspindel oder andere Komponenten der Bearbeitungsmaschine relativ zueinander. Ein Verbindungsbahnsegment, das relativ zum Werkstück vergleichsweise einfach ist, kann entsprechend eine komplexe Überlagerung mehrerer Bewegungen unterschiedlicher Komponenten der Bearbeitungsmaschine relativ zu mehreren oder allen Maschinenachsen erfordern, bei der zudem die Maschinenachsen Bewegungen vor und zurück durchführen, die bisweilen ruckartig sein können. Dies führt zu erheblichen Einbußen bei der Effizienz der Werkstückbearbeitung in der realen Maschine sowie zu einer hohen Belastung der Maschine.

EP 3 623 887 A1 offenbart, ein Verbindungssegment zwischen vorgegebene Bahnsegmente einzufügen, wobei vorgesehen ist, jeweilige Verbindungsfunktionen je Koordinatenachse gemäß einem festen Schema mit sieben Teilabschnitten bzw. Phasen heranzuziehen und darauf basierend das Verbindungssegment zu erstellen. Grundlage für die Erstellung der sieben Teilabschnitte bildet eine Bewegungsgleichung, wobei die Bewegungsgleichung in den jeweiligen Phasen vorgegebenen Bedingungen genügen muss.

WO 2017 / 005 453 A2 betrifft ein Trajektorienbestimmungsverfahren für Nebenzeitbewegungen. Zunächst wird eine erste Trajektorie vorgesehen, die Knicke umfasst. Basierend auf der ersten Trajektorie, einer Startposition der Bewegung und einer Zielposition der Bewegung wird unter Einbezug eines Algorithmus eine zweite Trajektorie umfassend einen Polynomabschnitt erzeugt, der frei ist von Knicken. Abschließend wird überprüft, dass an allen Punkten der zweiten Trajektorie Kollisionsfreiheit mit dem Werkstück vorliegt.

Ausgehend vom Stand der Technik liegt der vorliegenden Erfindung die Aufgabe zugrunde, einen hohen Grad an Effizienz und/oder einen geringen Belastungsgrad für eine Maschine bezüglich der Ausgestaltung von Verbindungsbahnsegmenten zu erzielen.

Diese Aufgabe wird erfindungsgemäß gelöst durch ein Verfahren mit den Merkmalen des Anspruchs 1, eine Software mit den Merkmalen des Anspruchs 10 und ein Computerprogrammprodukt mit den Merkmalen des Anspruchs 11. Weiterbildungen der Erfindung sind den abhängigen Ansprüchen zu entnehmen.

Der vorliegenden Erfindung liegt die Erkenntnis zugrunde, dass überraschend vorteilhafte Effekte für das Bearbeitungsergebnis und die Effizienz bei der Bearbeitung in der Bearbeitungsmaschine in einfacher Weise erzielt werden können, wenn bei der Bestimmung von Bearbeitungsbahnen bereits berücksichtigt wird, was deren Erzeugung für die Maschinenachsen der Bearbeitungsmaschine bedeutet. Der vorliegenden Erfindung liegt ferner die Erkenntnis zugrunde, dass ein verbessertes Verfahren zur Erstellung von Bearbeitungsbahnen dadurch angegeben werden kann, dass ein Bewegungsprofil der Maschinenachsen verbessert wird.

Die Erfindung stellt ein Verfahren zum Bestimmen einer Bearbeitungsbahn für eine materialabtragende Bearbeitung eines Werkstücks mittels einer mehrachsigen Bearbeitungsmaschine, insbesondere unabhängig von der konkreten Maschinensteuerung und/oder als Vorgabe für ein Postprocessing bzw. als postprozessierbare Bearbeitungsbahn, bereit. Dabei können aus der Bearbeitungsbahn computergestützt Steuerbefehle zur Ansteuerung einer Anzahl von N unterschiedlichen Maschinenachsen einer Bearbeitungsmaschine erzeugbar sein und/oder erzeugt werden, etwa im Rahmen einer Postprozessierung bzw. eines Postprocessings, nach deren Maßgabe ein Werkzeug, insbesondere ein Fräswerkzeug, kontinuierlich entlang der Bearbeitungsbahn bewegbar ist.

Eine Bearbeitungsbahn kann ein erstes Eingriffsbahnsegment und ein zweites Eingriffsbahnsegment umfassen, entlang derer sich das Werkzeug mit dem Werkstück zumindest abschnittsweise in Eingriff befindet. Ferner kann die Bearbeitungsbahn ein Verbindungsbahnsegment umfassen, entlang dessen das Werkzeug außer Eingriff mit dem Werkstück steht und das einen Endpunkt des ersten Eingriffsbahnsegments stetig und bezüglich des Werkstücks kollisionsfrei mit einem Startpunkt des zweiten Eingriffsbahnsegments verbindet.

Das erfindungsgemäße Verfahren umfasst ein Festlegen einer Interpolationsgruppe von Maschinenachsen, die wenigstens eine und höchstens N-1 der N Maschinenachsen umfasst; ein, insbesondere automatisches, Bestimmen, für die Maschinenachsen der Interpolationsgruppe, eines jeweiligen Interpolationsstartpunkts, der durch den Endpunkt des ersten Eingriffsbahnsegments bezogen auf die jeweilige Maschinenachse definiert ist; ein, insbesondere automatisches, Bestimmen, für die Maschinenachsen der Interpolationsgruppe, eines jeweiligen Interpolationsendpunkts, der durch den Startpunkt des zweiten Eingriffsbahnsegments bezogen auf die jeweilige Maschinenachse definiert ist; ein, insbesondere automatisches, Bestimmen, für die Maschinenachsen der Interpolationsgruppe, jeweils einer Verbindungsfunktion zwischen dem jeweiligen Interpolationsstartpunkt und dem jeweiligen Interpolationsendpunkt durch Interpolation bezogen auf die jeweilige Maschinenachse; ein, insbesondere automatisches, Festlegen des Verbindungsbahnsegments nach Maßgabe der bestimmten Verbindungsfunktionen; und ein, insbesondere automatisches, Festlegen der Bearbeitungsbahn unter Verwendung des bestimmten Verbindungsbahnsegments.

Die Erfindung umfasst ferner eine Software. Die Software kann das erfindungsgemäße Verfahren ganz oder teilweise implementieren. Sie umfasst insbesondere Programmcode, der dazu eingerichtet ist, die genannten Schritte zum Festlegen einer Interpolationsgruppe von Maschinenachsen, Bestimmen jeweiliger Interpolationsstartpunkte und Interpolationsendpunkte, Bestimmen einer jeweiligen Verbindungsfunktion, Festlegen eines Verbindungsbahnsegments und Festlegen einer Bearbeitungsbahn durchzuführen. Es versteht sich, dass unter dem Begriff "Software" ein Computerprogramm zu verstehen ist

Erfindungsgemäß kann demnach in der jeweiligen Maschinenachse gerechnet werden. Hierdurch wird eine Bewegung der realen Maschine für die Bestimmung der Bearbeitungsbahn berücksichtigt. Es können Verbindungswege generiert werden, die unnötige Achsbewegungen verhindern, wodurch Zeit gespart und die Maschine geschont werden kann. Zudem kann eine Kollisionsvermeidung sehr effizient und zugleich maschinenschonend erreicht werden. Die Erfindung gestattet es ferner, Umkehrbewegungen bezüglich einigen oder den meisten Maschinenachsen zu verringern und/oder zu vermeiden. Dies kann zum einen die Zeit verkürzen, die zum Abfahren eines Verbindungsbahnsegments erforderlich ist, weil nur in geringerem Umfang beschleunigt und abgebremst werden muss. Außerdem kann es die entsprechenden Antriebe der Maschine schonen, die seltener und/oder weniger stark eine Beschleunigung und/oder Verzögerung bereitstellen müssen.

Die Erfindung betrifft ferner ein Verfahren zur Bearbeitung eines Werkstücks mittels einer mehrachsigen Bearbeitungsmaschine, die unterschiedliche Maschinenachsen aufweist und die dazu eingerichtet ist, ein Werkstück mittels eines Werkzeugs, insbesondere mittels eines spanenden Werkzeugs wie etwa eines Fräswerkzeugs, eines Bohrwerkzeugs etc. durch Bewegen des Werkzeugs entlang einer Bearbeitungsbahn zu bearbeiten. Die Bearbeitungsbahn kann eine Bearbeitungsbahn sein, die in dem erfindungsgemäßen Verfahren zum Bestimmen einer Bearbeitungsbahn bestimmt wurde. Das Verfahren zur Bearbeitung eines Werkstücks kann ein Verfahren zum Bestimmen einer Bearbeitungsbahn umfassen.

Die Bearbeitungsbahn kann ein erstes Eingriffsbahnsegment und ein zweites Eingriffsbahnsegment umfassen, entlang derer sich das Werkzeug mit dem Werkstück zumindest abschnittsweise in Eingriff befindet. Die Bearbeitungsbahn kann ferner ein Verbindungsbahnsegment umfassen, entlang dessen das Werkzeug außer Eingriff mit dem Werkstück steht und das einen Endpunkt des ersten Eingriffsbahnsegments stetig und bezüglich des Werkstücks kollisionsfrei mit einem Startpunkt des zweiten Eingriffsbahnsegments verbindet. Das Verfahren kann ein Bearbeiten des Werkstücks durch Bewegen des Werkzeugs entlang des ersten Eingriffsbahnsegments umfassen. Zudem kann das Verfahren ein Bewegen des Werkzeugs entlang des Verbindungsbahnsegments durch Erzeugen von Bewegungen in den Maschinenachsen umfassen, wobei die Bewegungen in den Maschinenachsen derart erzeugt werden, dass in zumindest einer und in einigen Ausführungsformen in genau einer der Maschinenachsen ein Zurückbewegen und ein anschließendes Vorbewegen des Werkzeugs erfolgt, und dass in den anderen Maschinenachsen jeweils eine Bewegung erzeugt wird, deren Bewegungsrichtung beim Abfahren des Verbindungsbahnsegments beibehalten oder höchstens in unwesentlichem Umfang vorübergehend umgekehrt wird. Das Verfahren kann außerdem ein Bearbeiten des Werkstücks durch Bewegen des Werkzeugs entlang des zweiten Eingriffsbahnsegments umfassen.

Das Festlegen der Bearbeitungsbahn unter Verwendung des bestimmten Verbindungsbahnsegments kann ein Festlegen der Bearbeitungsbahn durch, insbesondere unmittelbares, Aneinanderreihen des ersten Eingriffsbahnsegments, des Verbindungsbahnsegments und des zweiten Eingriffsbahnsegments umfassen.

N kann in einigen Ausführungsformen 5 sein. Es kann aber auch eine andere Anzahl von Maschinenachsen verwendet werden, wie beispielsweise 3, 4 oder 6. **In** anderen Worten kann die Bearbeitungsmaschine wenigstens fünf Maschinenachsen aufweisen, wobei in wenigstens vier Maschinenachsen jeweils eine Bewegung erzeugt wird, deren Bewegungsrichtung beim Abfahren des Verbindungsbahnsegments beibehalten oder höchstens unwesentlich umgekehrt wird.

Die Auswahl derjenigen Achsen, für die bezogen auf die jeweilige Maschinenachse interpoliert wird, erfolgt durch Festlegen der Interpolationsgruppe. Das Festlegen der Interpolationsgruppe kann grundsätzlich automatisiert oder aufgrund einer Benutzervorgabe erfolgen. Anders ausgedrückt wird innerhalb der Interpolationsgruppe für jede der enthaltenen Maschinenachsen ein Startpunkt und ein Endpunkt für die Interpolation ausgewählt, und anschließend wird eine Verbindungsfunktion durch Interpolation ermittelt.

Die Bearbeitungsbahn kann insbesondere mittels einer Software und/oder eines Computersystems erzeugt werden, die/das unabhängig von der Bearbeitungsmaschine benutzbar ist. Hierbei kann beispielsweise ein CAM-System zum Einsatz kommen. Das Verfahren kann die Erstellung von NC-Code als Steuerbefehle zur Ansteuerung der Maschinenachsen umfassen, insbesondere im Rahmen einer Postprozessierung bzw. eines Postprocessings. Die Erstellung von NC-Code kann dabei auf der Grundlage der festgelegten Bearbeitungsbahn und/oder unabhängig von den obengenannten Verfahrensschritten erfolgen.

Es versteht sich, dass beliebige spanende Bearbeitungsmaschinen und entsprechend beliebige Werkzeuge von der Erfindung umfasst sind. Die Bearbeitung kann eine spanende Bearbeitung sein. Die Bearbeitung kann ein Fräsen, ein Bohren, ein Schleifen etc. sowie entsprechend geeignete Werkzeuge umfassen.

Die Bearbeitungsbahn ist insbesondere eine Bahn, entlang derer ein definierter Punkt des Werkzeugs und/oder einer Werkzeugkontur des Werkzeugs bewegt wird. Dabei kann es sich beispielsweise um einen Mittelpunkt, einen Kontaktpunkt, einen bestimmten Punkt auf einer Werkzeugschneide und/oder einen bestimmten Punkt auf einer Werkzeugachse handeln.

Entlang eines Eingriffsbahnsegments kann das Werkzeug zumindest abschnittsweise das Werkstück spanend bearbeiten, wenn es sich in Eingriff befindet. Die Eingriffsbahn kann zusätzlich An- und Abfahrbewegungen umfassen. In anderen Worten definiert ein bestimmtes Eingriffsbahnsegment einen bestimmten (Teil-)Bearbeitungsvorgang, wie beispielsweise die Bearbeitung einer Fläche, das Bohren einer Vertiefung etc. Ein Verbindungsbahnsegment stellt hingegen ein Segment der Bearbeitungsbahn dar, das einen Transfer des Werkzeugs zwischen zwei (Teil-)Bearbeitungsvorgängen bewirkt. Hierbei kann es sich beispielsweise um eine Bewegung von einer Werkstückseite auf eine andere Werkstückseite, eine Bewegung von einem Bohrloch zu einem anderen Bohrloch, eine Bewegung von einer ersten gefertigten Tasche zu einer zweiten gefertigten Tasche oder dergleichen handeln.

Die bestimmten Verbindungsfunktionen können jeweils eine Verbindung zwischen dem betreffenden Interpolationsstartpunkt und Interpolationsendpunkt bezogen auf die betreffende Maschinenachse herstellen. Zumindest eine oder sämtliche der Verbindungsfunktionen kann/können stetig und/oder krümmungsstetig und/oder tangentenstetig sein. Zumindest eine oder sämtliche der Verbindungsfunktionen kann/können sich an eine Bewegung in der betreffenden Maschinenachse vor dem betreffenden Interpolationsstartpunkt bzw. nach dem betreffenden Interpolationsendpunkt stetig aber tangentenunstetig und/oder krümmungsunstetig anschließen. In anderen Ausführungsformen können zumindest eine oder sämtliche der Verbindungsfunktionen sich an eine Bewegung in der betreffenden Maschinenachse vor dem betreffenden Startpunkt bzw. nach dem betreffenden Endpunkt stetig und/oder tangentenunstetig und/oder krümmungsunstetig anschließen.

Das Bestimmen des jeweiligen Interpolationsstartpunkts und/oder des jeweiligen Interpolationsendpunkts kann das maschinelle Auslesen der Koordinate des zugehörigen Endpunkts bzw. Startpunkts der angrenzenden Eingriffsbahnsegmente bezüglich der betreffenden Maschinenachse umfassen. Die jeweilige Interpolation wird insbesondere über eine Prozessschrittachse bzw. über eine Reihe von Programmzeilen durchgeführt. Die Verbindungsfunktionen können entsprechend einen Zusammenhang zwischen der Koordinate bezüglich der betreffenden Maschinenachse und derjenigen des Prozessfortschritts bzw. der Programmzeile beschreiben.

Die Interpolationsgruppe kann zumindest eine und insbesondere alle vorhandenen Drehachsen umfassen. Dabei kann die Interpolationsgruppe neben der zumindest einen Drehachse auch zusätzlich zumindest eine Linearachse bzw. eine Anzahl M von Linearachsen umfassen, wobei M gleich N minus die Anzahl der enthaltenen Drehachsen sein kann. In einigen Ausführungsformen der Erfindung ist die zumindest eine Maschinenachse, die nicht in der Interpolationsgruppe enthalten ist, eine Linearachse. Es können sämtliche Maschinenachsen, die nicht in der Interpolationsgruppe enthalten sind, Linearachsen sein. Für derartige Konstellationen ist eine Kollisionsvermeidung besonders einfach umsetzbar. Andere Kombinationen können aber ebenfalls vorgesehen sein. So kann beispielsweise die zumindest eine Maschinenachse, die nicht in der Interpolationsgruppe enthalten ist, auch eine Drehachse sein. Dies kann für bestimmte Bearbeitungsvorgänge und/oder Werkstückgeometrien vorteilhaft sein, wenn zum Beispiel eine Kollision wirksam durch geeignetes Verdrehen oder Verschwenken vermeidbar ist.

In anderen Ausführungsformen kann die Interpolationsgruppe zumindest eine und insbesondere alle vorhandenen Linearachsen umfassen. Dabei kann die Interpolationsgruppe neben der zumindest einen Linearachse auch zusätzlich zumindest eine Drehachse bzw. eine Anzahl M von Drehachsen umfassen, wobei M gleich N minus die Anzahl der enthaltenen Linearachsen sein kann. In einigen Ausführungsformen der Erfindung ist die zumindest eine Maschinenachse, die nicht in der Interpolationsgruppe enthalten ist, eine Drehachse. Es können sämtliche Maschinenachsen, die nicht in der Interpolationsgruppe enthalten sind, Drehachsen sein.

Das Verbindungsbahnsegment ist insbesondere dahingehend kollisionsfrei, dass das Werkzeug entlang des Verbindungsbahnsegments gezielt um das Werkstück herum geführt wird. Das Verbindungsbahnsegment weist insbesondere einen kurvigen Verlauf auf. Das Verbindungsbahnsegment kann beispielsweise einem von einem geraden Verlauf verschiedenen Verlauf folgen. Auch kann das Verbindungsbahnsegment sich in einigen Ausführungsformen von einer Kreisbahn oder einem Kreisbahnabschnitt unterscheiden. Das Verbindungsbahnsegment kann in wenigstens zwei Raumrichtungen gekrümmt ausgebildet sein. Dabei kann das Verbindungsbahnsegment insofern kollisionsfrei sein, dass in Abwesenheit seiner Krümmung eine Kollision auftreten würde.

Die Interpolationsgruppe kann genau N-1 der N Maschinenachsen umfassen. Dies kann den Vorteil haben, dass lediglich in einer Maschinenachse deutlich ausgeprägte Umkehrbewegungen auszuführen sind.

Das erwähnte Umkehren der Bewegungsrichtung in höchstens unwesentlichem Umfang kann eine Bewegung entlang der betreffenden Achse während des Umkehrens höchstens über eine Entfernung umfassen, die höchsten 20 %, in einigen Ausführungsformen höchstens 10 % und insbesondere höchstens 5 % einer Entfernung beträgt, über die ein Umkehren erfolgt, um den Rückzug und das anschließende Vorbewegen zu erzeugen. In anderen Worten kann die Bewegungsrichtung im Wesentlichen beibehalten werden.

Gemäß einer Ausführungsform wird das Interpolieren derart durchgeführt, dass die Verbindungsfunktion für jede der Maschinenachsen der Interpolationsgruppe eine monotone Funktion ist. Die betreffende Funktion kann ggf. anders als eine monotone Funktion Umkehrpunkte umfassen, wobei jedoch hierdurch beschriebene Umkehrbewegungen in der betreffenden Maschinenachse klein sind im Vergleich zur insgesamt von der Funktion definierten Bewegung. Beispielsweise können hiervon Umkehrbewegungen im einstelligen Prozentbereich verglichen mit einem Gesamtbewegungsumfang umfasst sein. Die Verwendung monotoner Funktionen führt dazu, dass die den betreffenden Maschinenachsen zugeordneten Antriebe allenfalls geringfügige Vor- und Rückbewegungen erzeugen müssen, was zur Vermeidung unnötig großer Beschleunigungen und Verzögerungen beitragen kann.

Die Verbindungsfunktion kann insofern eine monotone Funktion sein, dass für eine Referenzfunktion, die eine monotone Funktion ist, die den jeweiligen Interpolationsstartpunkt mit dem jeweiligen Interpolationsendpunkt verbindet und für die eine maximale Abweichung von der Verbindungsfunktion minimal ist, die maximale Abweichung zwischen der Verbindungsfunktion und der Referenzfunktion kleiner als 20 %, vorzugsweise kleiner als 10 % und besonders bevorzugt kleiner als 5 % eines Abstands zwischen dem Interpolationsstartpunkt und dem Interpolationsendpunkt bezogen auf die jeweilige Maschinenachse ist. Anders gesagt kann bestimmt werden, ob eine Verbindungsfunktion monoton ist, indem die betreffende Interpolationsfunktion mit allen möglichen monotonen Funktionen verglichen wird, diejenige monotone Funktion ausgewählt wird, für die der maximale Abstand zur Interpolationsfunktion am kleinsten ist, dieser maximale Abstand bestimmt und dann mit den angegebenen Grenzwerten verglichen wird.

Eine Kollisionsvermeidung kann insbesondere dann effizient und maschinenschonend erreicht werden, wenn für zumindest eine der Maschinenachsen, die nicht zu der Interpolationsgruppe gehört, zwischen dem Endpunkt des ersten Eingriffsbahnsegments und dem Startpunkt des zweiten Eingriffsbahnsegments eine kollisionsvermeidende nicht-monotone Interpolation durchgeführt wird. In anderen Worten wird eine Kollisionsvermeidung mittels derjenigen Maschinenachsen erreicht, die nicht zu der Interpolationsgruppe gehören. In einigen Ausführungsformen wird bezüglich allen bis auf eine der Maschinenachsen eine monotone Verbindungsfunktion und bezüglich der verbleibenden Maschinenachse eine nicht-monotone Verbindungsfunktion bestimmt.

Gemäß einer Ausführungsform kann das Verfahren ferner ein Bestimmen zumindest einer, insbesondere genau einer, der N Maschinenachsen, die nicht zu der Interpolationsgruppe gehört, als Rückzugsmaschinenachse umfassen. Hierdurch kann eine Kollisionsvermeidung einfach und gezielt verwirklicht werden. Die Rückzugsmaschinenachse kann eine Achse sein, in der ein Zurückziehen bzw. Zurückbewegen des Werkzeugs vom Werkstück durchgeführt wird, um eine Kollision zu verhindern. Die Rückzugsmaschinenachse kann eine Linearachse sein. Dies kann beispielsweise ein effektives Zurückziehen und/oder Wegbewegen des Werkzeugs vom Werkstück ermöglichen, das unabhängig von der Werkstückgeometrie zuverlässig funktioniert. Die Rückzugsachse kann auch eine Drehachse sein. Für Werkstücke mit entsprechender Geometrie kann ggf. eine Kollision dadurch sehr effizient vermieden werden, dass das Werkstück relativ zum Werkzeug verdreht bzw. verschwenkt wird. Das Verfahren kann die Verwendung unterschiedlicher Rückzugsachsen für unterschiedliche Verbindungsbahnsegmente umfassen.

Das Bestimmen der Rückzugsmaschinenachse kann auf einer Benutzervorgabe beruhen. Es kann auch eine Gruppe infrage kommender Achsen von einem Benutzer vorgebbar sein, aus denen automatisiert zumindest eine als Rückzugsmaschinenachse ausgewählt wird. Diese automatisierte Auswahl kann global, programmabschnittbezogen oder für jedes Verbindungsbahnsegment individuell erfolgen. Alternativ oder zusätzlich kann global, programmabschnittbezogen oder für jedes Verbindungsbahnsegment individuell eine Benutzervorgabe anwendbar und/oder abrufbar sein. In einigen Ausführungsformen kann eine Rückzugsmaschinenachse oder auch mehrere mögliche Rückzugsmaschinenachsen als Default vorgegeben aber durch Benutzervorgabe abänderbar sein. Beispielsweise kann standardmäßig eine bestimmte Linearachse als Rückzugsachse vorgegeben, aber die Möglichkeit einer benutzervorgegebenen Auswahl einer anderen Achse für einige oder alle Verbindungsbahnsegmente vorgesehen sein. Ferner kann vorgesehen sein, dass ein Benutzer eine Vorgabe machen kann, welche Maschinenachse bzw. welche Maschinenachsen in jedem Fall nicht als Rückzugsachse dienen soll/sollen.

Ein hoher Grad an Zeiteffizienz kann insbesondere dann erzielt und/oder ein maschinenschonendes Bearbeitungsprogramm kann insbesondere dann gewonnen werden, wenn die Rückzugsachse eine Maschinenachse und/oder eine der Linearachsen und/oder eine der Drehachsen der Bearbeitungsmaschine ist, die über ein größtes Beschleunigungsvermögen und/oder über eine größte Maximalgeschwindigkeit unter den Maschinenachsen verfügt.

Das Verfahren kann außerdem ein Bestimmen, für die Rückzugsmaschinenachse, eines Rückzugsstartpunkts, der durch den Endpunkt des ersten Eingriffsbahnsegments bezogen auf die Rückzugsachse definiert ist, umfassen. Des Weiteren kann das Verfahren ein Bestimmen, für die Rückzugsmaschinenachse, eines Rückzugsendpunkts, der durch den Startpunkt des zweiten Eingriffsbahnsegments bezogen auf die Rückzugsmaschinenachse definiert ist, umfassen. Der Rückzugsstartpunkt und der Rückzugsendpunkt können in anderen Worten denjenigen Koordinaten bezüglich der Rückzugsmaschinenachse entsprechen, zwischen denen das kollisionsvermeidende Zurückziehen stattfinden soll. Das Verfahren kann außerdem den Schritt eines Bestimmens, für die Rückzugsmaschinenachse, einer Rückzugsfunktion umfassen, die zwischen dem Rückzugsstartpunkt und dem Rückzugsendpunkt unter Berücksichtigung einer Geometrie des Werkstücks derart verläuft, dass das Werkzeug bei einer Bewegung entlang der Verbindungsbahn zunächst bezüglich der Rückzugsmaschinenachse derart zurückbewegt und anschließend wieder vorbewegt wird, dass in Kombination mit der einen oder den mehreren Verbindungsfunktionen, die für die Interpolationsgruppe bestimmt wurden, eine Kollision mit dem Werkstück vermieden wird. In einigen Ausführungsformen wird die Rückzugsfunktion als stetige, vorzugsweise tangentenstetige und besonders bevorzugt krümmungsstetige, Funktion mit einem einzelnen Extremum bestimmt. Beispielsweise kann eine parabelförmige, bogenförmige und/oder glockenförmige Funktion verwendet werden. Dies kann zu einer sanften und somit maschinenschonenden Bewegung in der entsprechenden Maschinenachse führen.

Ein hoher Grad an Variabilität kann insbesondere dann erzielt und/oder prozessbezogene Eigenheiten können insbesondere dann wirksam berücksichtigt werden, wenn das Bestimmen der Interpolationsgruppe auf einer Benutzervorgabe beruht. Beispielsweise kann ein Benutzer vorgeben, welche Maschinenachsen zwingend zur Interpolationsgruppe gehören sollen und/oder welche Maschinenachsen bedarfsweise zur Interpolationsgruppe gehören dürfen und/oder welche Maschinenachsen in jedem Fall nicht zur Interpolationsgruppe gehören sollen. In einigen Ausführungsformen kann eine Interpolationsgruppe oder mehrere wahlweise selektierbare Interpolationsgruppen als Vorauswahl bzw. Default vorgegeben sein, wobei zusätzlich eine Abänderbarkeit durch den Benutzer vorgesehen sein kann. Vorzugsweise ist jede Maschine entweder in der Interpolationsgruppe enthalten oder dient als Rückzugsachse.

Erfindungsgemäß kann vorgesehen sein, dass das Verbindungsbahnsegment iterativ bestimmt wird. Das Iterative Bestimmen kann umfassen, dass für unterschiedliche Iterationen basierend auf jeweils einer anderen Interpolationsgruppe jeweils eine Kollisionsprüfung durchgeführt wird. Hierdurch kann effizient ermittelt werden, wie eine Kollision zuverlässig, zeiteffizient und/oder maschinenschonend vermieden werden kann. Vorzugsweise wird für jede Iteration eine einzelne Maschinenachse als Rückzugsachse ausgewählt und die Kollisionsprüfung für die verbleibenden Maschinenachsen durchgeführt, die sich dann in der Interpolationsgruppe für die entsprechende Iteration befinden.

Verbindungsbahnsegmente können insbesondere dann mit hoher Recheneffizienz und/oder zuverlässig mittels eines Werkzeugs abfahrbar ermittelt werden, wenn die jeweilige Verbindungsfunktion zumindest abschnittsweise durch lineare Interpolation bestimmt wird. Die Verbindungsfunktion kann mehrere linear interpolierte Abschnitte umfassen. Die jeweilige Verbindungsfunktion kann alternativ oder zusätzlich stufig und/oder S-Kurven-förmig und/oder abgerundet gestuft sein.

Eine Optimierung von Verbindungsbahnsegmenten hinsichtlich einer zuverlässigen Kollisionsvermeidung kann insbesondere dann in einfacher Weise erreicht werden, wenn die Bearbeitungsbahn in dem Verbindungsbahnsegment und/oder an Übergängen zwischen dem Verbindungsbahnsegment und zumindest einem der Eingriffsbahnsegmente tangentenunstetig und/oder krümmungsunstetig ist. Anders ausgedrückt müssen die Eingriffsbahnsegmente und das zwischen ihnen liegende Verbindungsbahnsegment nicht zwingend glatt und/oder ohne Kurvenknick ineinander übergehen bzw. das Verbindungsbahnsegment nicht glatt und/oder ohne Kurvenknick ausgebildet sein. Beispielsweise können lineare Teilsegmente mit unterschiedlicher Steigung aneinander angrenzen.

Die Erfindung umfasst auch ein Computerprogrammprodukt mit zumindest einem Speichermedium, auf dem der Programmcode der erfindungsgemäßen Software gespeichert ist. Das Speichermedium kann ein flüchtiges und/oder ein nicht flüchtiges Speichermedium sein.

Im Folgenden wird die vorliegende Erfindung anhand der beigefügten Figuren beispielhaft beschrieben. Die Zeichnung, die Beschreibung und die Ansprüche enthalten zahlreiche Merkmale in Kombination. Der Fachmann wird die Merkmale zweckmäßigerweise auch einzeln betrachten und im Rahmen der Ansprüche sinnvoll in Kombination verwenden. Es zeigen:
- Fig. 1: eine schematische Darstellung einer Bearbeitungsmaschine;
- Fig. 2: eine schematische Darstellung einer Bearbeitungsbahn;
- Fig. 3: eine schematische perspektivische Darstellung eines ersten Verbindungsbahnsegments;
- Fig. 4a-e: schematische Darstellungen von Bewegungen in fünf Maschinenachsen entlang des ersten Verbindungsbahnsegments;
- Fig. 5: ein schematisches Ablaufdiagramm eines Verfahrens zum Bestimmen einer Bearbeitungsbahn;
- Fig. 6: eine schematische perspektivische Darstellung eines zweiten Verbindungsbahnsegments einer zweiten Bearbeitungsbahn;
- Fig. 7a-e: schematische Darstellungen von Bewegungen in fünf Maschinenachsen entlang des zweiten Verbindungsbahnsegments;
- Fig. 8: ein schematisches Diagramm zur Veranschaulichung einer Bewegung in einer Maschinenachse; und
- Fig. 9a-b: schematische Darstellungen von Bewegungen in zwei Maschinenachsen für lineare Verbindungsfunktionen; und
- Fig. 10: ein schematisches Ablaufdiagramm eines Verfahrens zur Bearbeitung eines Werkstücks.

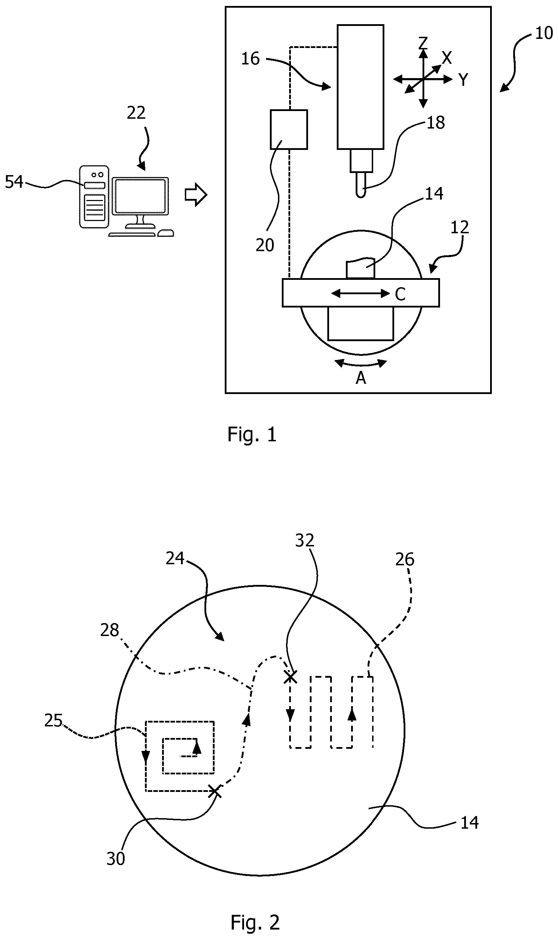

Für die folgende Beschreibung wird auf die in Fig. 1 schematisch dargestellte Bearbeitungsmaschine 10 Bezug genommen. Diese ist rein beispielhaft zu verstehen, insbesondere was ihre bewegbaren Achsen angeht. Es können in anderen Ausführungsformen andere Maschinenachsen und/oder eine andere Anzahl von Maschinenachsen vorgesehen sein.

Die Bearbeitungsmaschine 10 umfasst einen Werkstücktisch 12, auf dem ein Werkstück 14 anordenbar bzw. befestigbar ist. Das Werkstück 14 kann mittels der Bearbeitungsmaschine 10 spanend bearbeitet werden. Im exemplarisch gezeigten Fall handelt es sich um eine Fräsmaschine.

Die Bearbeitungsmaschine 10 umfasst zudem eine Bearbeitungseinheit 16, wie etwa einen Kopf bzw. Fräskopf, mit einem Werkzeug 18 zur Bearbeitung des Werkstücks 14. Die Bearbeitungseinheit 16 umfasst im dargestellten Fall beispielsweise eine Werkzeugspindel.

Die Bearbeitungsmaschine 10 ist mehrachsig bzw. N-achsig, beispielhaft 5-achsig. Zur Veranschaulichung definiert beispielsweise der Werkstücktisch 12 zwei Drehachsen A, C und die Bearbeitungseinheit 16 drei Linearachsen X, Y, Z. Andere Konfigurationen sind jedoch ebenso möglich.

Die Bearbeitungsmaschine 10 umfasst ferner eine Steuereinheit 20, die Steuerbefehle an die N unterschiedlichen Maschinenachsen ausgeben kann. Die Bearbeitungsmaschine 10 ist insbesondere eine CNC-Maschine, und die Steuerbefehle können entsprechend NC-Befehle sein.

Ferner ist ein CAM-System 22 vorgesehen. Dieses ist in vielen Ausführungsformen nicht Teil der Bearbeitungsmaschine 10, sondern kann maschinenunabhängig arbeiten. Mittels des CAM-Systems 22 kann anhand von CAD-Daten des Werkstücks 14 bzw. dessen Zielgeometrie eine Bearbeitungsbahn erzeugt werden, aus denen in einem Postprocessing in grundsätzlich bekannter Weise Steuerbefehle für die Bearbeitungsmaschine 10 erzeugt werden können.

Eine beispielhafte Bearbeitungsbahn 24 ist in Fig. 2 gezeigt. Die Darstellung dient lediglich der Illustration und ist weder zwingend maßstabsgetreu noch vollständig. Zu einer Bearbeitung des Werkstücks 14 kann das Werkzeug 18 nach Maßgabe der Bearbeitungsbahn 24 relativ zum Werkstück 14 bewegt werden. Die Bearbeitungsbahn 24 umfasst ein erstes Eingriffsbahnsegment 25 und ein zweites Eingriffsbahnsegment 26, entlang derer sich das Werkzeug 18 jeweils zumindest abschnittsweise mit dem Werkstück 14 in Eingriff befindet. Die Eingriffsbahnsegmente 25, 26 können beispielsweise der Bearbeitung unterschiedlicher geometrischer Merkmale des Werkstücks 14 dienen, wofür auch unterschiedliche Bearbeitungsstrategien zum Einsatz kommen können. Das erste Eingriffsbahnsegment 25 weist einen Endpunkt 30 auf. Das zweite Eingriffsbahnsegment 26 weist einen Startpunkt 32 auf. Erkennbar fallen der Endpunkt 30 und der Startpunkt 32 nicht zusammen. Bei der Bearbeitung muss daher das Werkzeug 18 nach Abschluss der Bearbeitung entlang des ersten Eingriffsbahnsegments 26 und vor der Bearbeitung entlang des zweiten Eingriffsbahnsegments 28 relativ zu dem Werkstück 14 bewegt werden, um vom Endpunkt 30 zum Startpunkt 32 zu gelangen. Die Bearbeitungsbahn 24 umfasst hierfür ein Verbindungsbahnsegment 28, das den Endpunkt 30 und den Startpunkt 32 stetig miteinander verbindet. Entlang des Verbindungsbahnsegments 28 steht das Werkzeug 18 außer Eingriff mit dem Werkstück 14. Es versteht sich, dass die Darstellung in Fig. 2 rein schematisch ist. Insbesondere kann die Bearbeitungsbahn 24 und/oder das Verbindungsbahnsegment 28 und/oder das erste Eingriffsbahnsegment 25 und/oder das zweite Eingriffsbahnsegment 26 einen dreidimensionalen Verlauf aufweisen. Im Allgemeinen kann es sich bei der Bearbeitungsbahn 24 um eine dreidimensional ausgedehnte Kurve handeln.

Das Verbindungsbahnsegment 28 definiert eine kollisionsfreie Bewegung. In anderen Worten ist das Verbindungsbahnsegment 28 derart gewählt, dass beim Bewegen des Werkzeugs 18 entlang des Verbindungsbahnsegments 28 weder das Werkzeug 18 noch ein anderer Teil der Bearbeitungsmaschine 10 wie beispielsweise die Bearbeitungseinheit 16 mit dem Werkstück 14 zusammenstoßen.

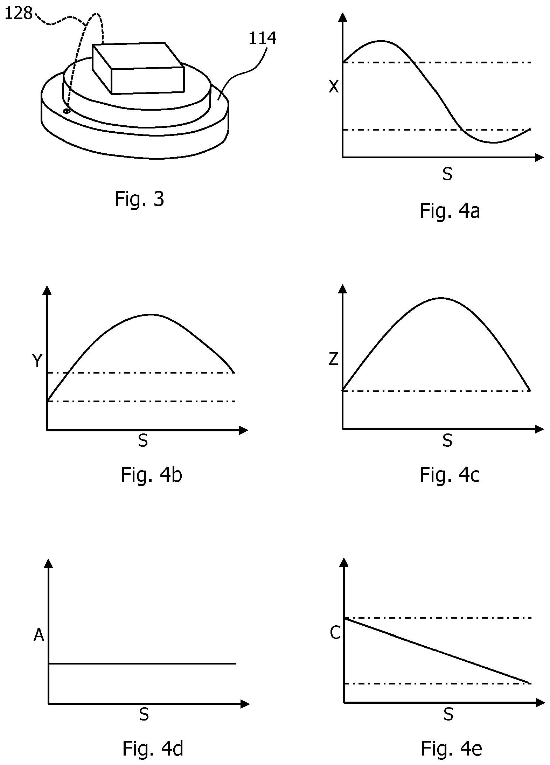

In Fig. 3 ist ein erstes Verbindungsbahnsegment 128 gezeigt, das relativ zu einem Werkstück 114 kollisionsvermeidend ist. Das Verbindungsbahnsegment 128 verbindet wie oben erläutert zwei nicht dargestellte Eingriffsbahnsegmente. Das erste Verbindungsbahnsegment 128 ist nach einem herkömmlichen Verfahren bestimmt, bei dem auf eine Bearbeitungsbahn abgezielt wird, die krümmungsstetige und tangentenstetige Übergänge zwischen Eingriffsbahnsegmenten und Verbindungssegmenten umfasst. In anderen Worten wird auf eine weiche Bearbeitungsbahn, beispielsweise in Form eines Splines, abgezielt. Wie in Fig. 3 zu erkennen ist, beschreibt das Verbindungsbahnsegment 128 einen ausladenden Bogen, der um das Werkstück 114 kollisionsvermeidend herumführt.

Gemäß herkömmlichen Verfahren wird ein Verbindungsbahnsegment wie beispielsweise das erste Verbindungsbahnsegment 128 bestimmt, indem auf Werkzeugbahnebene, d. h. relativ zum Werkstück, gerechnet und interpoliert wird. Hierbei werden die jeweiligen Verläufe der zu verbindenden Eingriffsbahnsegmente berücksichtigt, beispielsweise indem Steigung und Krümmung an deren Endpunkt bzw. Startpunkt als Randbedingungen dienen. Anschließend wird ermittelt, wie die Bearbeitungsbahn durch geeigneten Vorschub in den verschiedenen Maschinenachsen X, Y, Z, A, C umzusetzen ist. Für das erste Verbindungsbahnsegment ergeben sich dabei beispielhaft die in Fig. 4a-e gezeigten Bewegungsbahnen in den Maschinenachsen X, Y, Z, C, A durch ein Postprocessing. Für andere Geometrien und/oder Bewegungen können entsprechend weitere und/oder andere Achsen an der Bewegungserzeugung beteiligt sein. Fig. 4a-e sind diesbezüglich rein veranschaulichend zu verstehen. S bezeichnet dabei einen aktuellen Prozessfortschritt bzw. eine Programmzeile. Wie zu erkennen ist, erfolgt beim Abfahren des ersten Verbindungsbahnsegments 128 in jeder der drei Maschinenachsen X, Y, Z eine Bewegungsumkehr. Die gestrichelten Linien markieren die Nettobewegung in der jeweiligen Maschinenachse X, Y, Z zwischen einem Start- und einem Endpunkt des Verbindungsbahnsegments 128, die im dargestellten Fall beispielsweise für die X-Achse ein negatives Vorzeichen trägt, für die Y-Achse ein positives Vorzeichen trägt, und für die Z-Achse Null ist. Die Bewegung in der C-Achse ist linear, in der A-Achse findet im dargestellten Beispiel keine Bewegung statt.

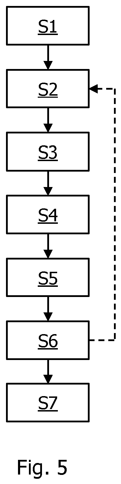

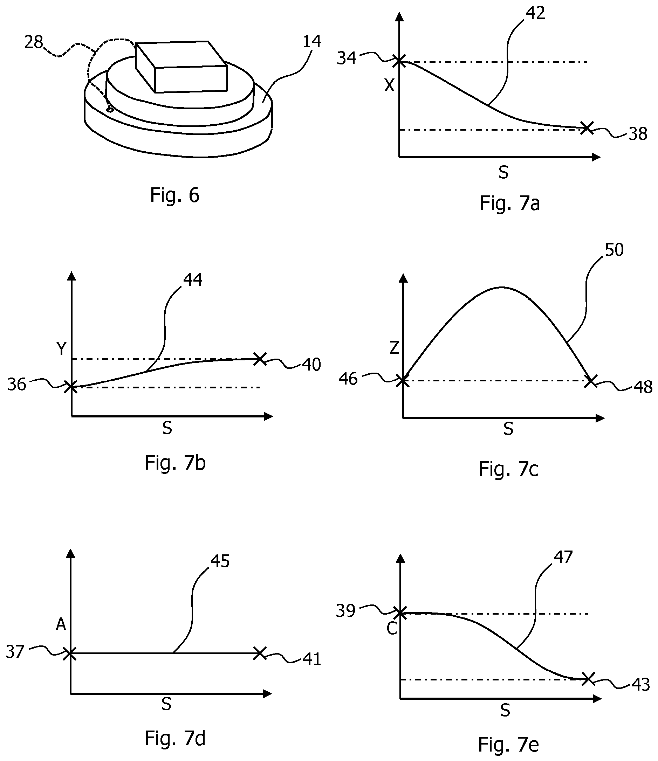

Demgegenüber wird im Folgenden ein erfindungsgemäßes Verfahren beschrieben. Ein schematisches Ablaufdiagramm dieses Verfahrens ist in Fig. 5 dargestellt. In Fig. 6 ist ein Verbindungsbahnsegment 28 gezeigt, das im Verfahren berechnet wird. Auch dieses Verbindungsbahnsegment 28 ist bezüglich des Werkstücks 14 kollisionsfrei. Fig. 7a-e zeigen beispielhaft Bewegungen in den Maschinenachsen X, Y, Z, A, C die sich aus dem Verbindungsbahnsegment 28 ergeben. Wie oben beschrieben, ist das Verbindungsbahnsegment 28 Teil einer Bearbeitungsbahn und verbindet in Fig. 6 nicht dargestellte Eingriffsbahnsegmente (vgl. Fig. 2).

In einem Schritt S1 wird eine Interpolationsgruppe von Maschinenachsen festgelegt. Dieses Festlegen kann auf einer Benutzervorgabe beruhen und/oder automatisiert erfolgen. Zum Abfragen der Benutzervorgabe kann das CAM-System 22 eine Benutzerschnittstelle aufweisen. Die Interpolationsgruppe umfasst im dargestellten Fall beispielsweise alle Achsen bis auf die Z-Achse.

Der Zweck der Interpolationsgruppe wird nachfolgend noch näher erläutert. Generell ist vorgesehen, für die Maschinenachsen der Interpolationsgruppe eine einfache, robuste und maschinenschonende Bewegung in der betreffenden Maschinenachse zu erzeugen. Die verbleibende Maschinenachse bzw. in manchen Ausführungsformen die mehreren verbleibenden Maschinenachsen dient/dienen als Rückzugsachse, mittels derer eine Kollisionsvermeidung maßgeblich umgesetzt werden kann. Im exemplarischen Fall dient die Z-Achse als Rückzugsachse. Für diese Achse wird in Kauf genommen, dass aus Gründen einer Kollisionsvermeidung eine beträchtliche Bewegungsumkehr stattfinden muss (vgl. Fig. 7c). Für die anderen Achsen kann hingegen weitgehend oder vollständig auf Umkehrbewegungen verzichtet werden, wie im Folgenden erläutert wird.

In einem Schritt S2 wird für die Maschinenachsen der Interpolationsgruppe ein jeweiliger Interpolationsstartpunkt 34, 36, 37, 41 bestimmt. Diese Interpolationsstartpunkte 34, 36, 37, 41 ergeben sich aus dem Endpunkt 30 des ersten Eingriffsbahnsegments 25 (vgl. Fig. 2) als die Koordinaten des Endpunkts 30 bezüglich der betreffenden Maschinenachsen X, Y, A, C.

In einem Schritt S3 wird für die Maschinenachsen der Interpolationsgruppe ein jeweiliger Interpolationsendpunkt 38, 40, 41, 43 bestimmt. Diese Interpolationsendpunkte 38, 40, 41, 43 ergeben sich aus dem Startpunkt 32 des zweiten Eingriffsbahnsegments 26 (vgl. Fig. 2) als die Koordinaten des Startpunkts 32 bezüglich der betreffenden Maschinenachsen X, Y, A, C.

In einem Schritt S4 wird jeweils eine Verbindungsfunktion 42, 44, 45, 47 zwischen dem jeweiligen Interpolationsstarpunkt 34, 36, 37, 39 und dem jeweiligen Interpolationsendpunkt 38, 40, 41, 43 durch Interpolation bezogen auf die jeweilige Maschinenachse (im Beispiel etwa X, Y, A und C) durch Interpolation bestimmt. Für die Achse A erfolgt im vorliegenden Beispiel keine Bewegung in der Maschinenachse. Dies kann jedoch je nach Werkstückgeometrie, Werkzeugtyp, Verbindungsbahnsegment, etc. anders sein. Die Beschreibung für vier Maschinenachsen X, Y, Z, C, in denen entlang des Verbindungsbahnsegments 28 eine Bewegung erfolgt, dient lediglich der Veranschaulichung.

Die Verbindungsfunktionen 42, 44, 45, 47 sind bevorzugt derart gewählt, dass Umkehrbewegungen in der betreffenden Maschinenachse X, Y, A, C bei der Bewegung entlang des Verbindungsbahnsegments 28 weitgehend vermieden werden. Erkennbar sind die Bewegungen in den Maschinenachsen X, Y, A, C, die in Fig. 7a, 7b, 7d und 7e gezeigt sind, vergleichsweise maschinenschonend und effizient, weil in der jeweiligen Maschinenachse X, Y, A, C nicht entlang des Verbindungsbahnsegments 28 abgebremst, umgekehrt, beschleunigt, erneut abgebremst und erneut beschleunigt werden muss.

Die Verbindungsfunktionen 42, 44, 45, 47 sind im vorliegenden Beispiel S-Kurven-förmig und/oder stufig. Die Verbindungsfunktionen 42, 44, 45, 47 können dabei symmetrisch bezüglich einer Mitte auf der S-Achse (Prozessfortschritt bzw. Programmzeile) sein. Je nach Kollisionssituation kann es jedoch auch günstig sein, zunächst keine oder nur eine geringfügige Bewegung in der betreffenden Maschinenachse auszuführen bzw. bereits zu Beginn den Großteil der zu vollführenden Bewegung oder die gesamte zu vollführende Bewegung bereitzustellen. Insofern beinhaltet die Interpolation der Verbindungsfunktionen 42, 44, 45, 47 eine Kollisionsprüfung sowie eine zugehörige Optimierung, die iterativ durchgeführt werden kann, bis die Bewegungen in den Maschinenachsen X, Y, Z, A, C dahingehend sinnvoll aufeinander abgestimmt sind, dass ohne übermäßig ausladende Rückzugsbewegungen in der Rückzugsachse eine Kollision vermieden werden kann.

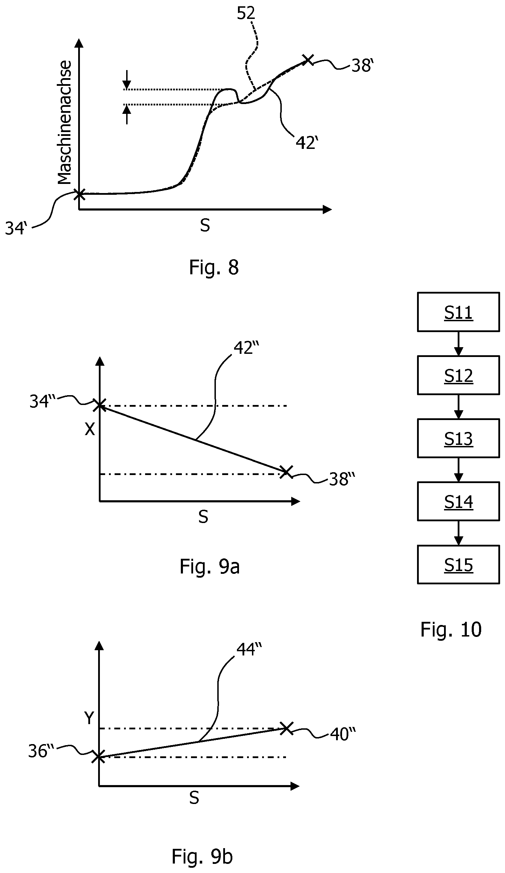

Die Verbindungsfunktionen 42, 44, 45, 47 sind in einigen Ausführungsformen monotone Funktionen. Eine Verbindungsfunktion 42' kann unter Bezugnahme auf Fig. 8 insbesondere dahingehend eine monotone Funktion sein, dass für eine Referenzfunktion 52, die eine monotone Funktion ist, die einen Interpolationsstartpunkt 34' mit einem Interpolationsendpunkt 38' verbindet und für die eine maximale Abweichung (eingezeichnet mittels der kurzen Pfeile und der gepunkteten Linien) von der Verbindungsfunktion 42' minimal ist, die maximale Abweichung zwischen der Verbindungsfunktion 42' und der Referenzfunktion 52 kleiner als 20 %, vorzugsweise kleiner als 10 % und besonders bevorzugt kleiner als 5 % eines Abstands zwischen dem Interpolationsstartpunkt 34' und dem Interpolationsendpunkt 38' bezogen auf die entsprechende Maschinenachse X, Y, Z, A, C ist.

In Fig. 9a und 9b sind alternative Verbindungsfunktionen 42", 44" dargestellt, beispielhaft lediglich für die Achsen X und Y. Diese beruhen auf linearer Interpolation. Die Interpolation in den Maschinenachsen der Interpolationsgruppe ist hierdurch besonders einfach.

In weiteren Ausführungsformen können auch mehrere linear interpolierte Teilabschnitte zu einer Verbindungsfunktion zusammengesetzt sein. Somit kann beispielsweise ein stufiger Verlauf der betreffenden Verbindungsfunktion erzeugt werden, etwa, wenn dies zur Kollisionsvermeidung zweckmäßig ist.

In einigen Ausführungsformen kann zunächst für alle Maschinenachsen linear interpoliert und eine Kollisionsprüfung durchgeführt werden. Tritt keine Kollision auf, kann das Verbindungsbahnsegment schlicht durch lineare Bewegungen in den Maschinenachsen definiert sein. Tritt hingegen eine Kollision auf, können nichtlineare Verbindungsfunktionen testweise berechnet werden. Alternativ oder zusätzlich kann für die Rückzugsachse die lineare Interpolation durch eine Rückzugsfunktion ersetzt und eine erneute Kollisionsprüfung durchgeführt werden. Oben wurde entsprechend der Fall beschrieben, dass sich ohne Rückzugsachse eine Kollision nicht sinnvoll vermeiden lässt.

In einem Schritt S5 wird für die Rückzugsachse wie erwähnt eine kollisionsvermeidende nicht-monotone Interpolation durchgeführt. Dies ist in Fig. 7c veranschaulicht. In der als Rückzugsachse dienenden Z-Achse wird im beispielhaften Fall ein Rückzug zwischen einem Rückzugsstartpunkt 46 und einem Rückzugsendpunkt 48 erzeugt. Diese sind durch den Endpunkt 30 und den Startpunkt 32 der Eingriffsbahnsegmente 25, 26 definiert. Als Rückzugsfunktion 50 wird beispielsweise eine Parabel, ein Kreisbogen oder auch eine Aneinanderreihung mehrerer linearer Teilstücke oder ein Spline oder eine beliebige Kurve mit den nötigen Eigenschaften gewählt, wodurch das Werkzeug 18 bei der Bewegung entlang des Verbindungsbahnsegments 28 zunächst zurückbewegt und anschließend wieder vorbewegt wird. Allgemein kann vorgesehen sein, dass die Rückzugsfunktion 50 eine stetige, vorzugsweise tangentenstetige und besonders bevorzugt krümmungsstetige, Funktion mit einem einzelnen Extremum ist.

Als Rückzugsachse kann eine Linearachse oder eine Drehachse dienen. Die Verwendung der Z-Achse als Rückzugsachse ist insofern lediglich beispielhaft. Sie kann sich, wie erläutert, aus der Wahl der Interpolationsgruppe als verbleibende Achse ergeben. Sind mehrere Maschinenachsen nicht in der Interpolationsgruppe enthalten, kann eine davon als Rückzugsachse ausgewählt werden.

In einigen Ausführungsformen ist die Rückzugsachse diejenige Maschinenachse X, Y, Z, A, C der Bearbeitungsmaschine 10, die über ein größtes Beschleunigungsvermögen und/oder über eine größte Maximalgeschwindigkeit verfügt. Wie anhand von Fig. 7a-c erkennbar ist, kommt es in vielen Fällen vor, dass in der Rückzugsachse die umfangreichste Bewegung durchgeführt wird, selbst wenn die Maschinenachsen-Koordinaten von Rückzugsstartpunkt 46 und Rückzugsendpunkt 48 identisch sind. Es kann dann zeiteffizient und/oder maschinenschonend sein, eine schnelle und/oder schnell ansprechende Maschinenachse als Rückzugsachse zu verwenden.

Unter erneuter Bezugnahme auf Fig. 5 erfolgt in einem Schritt S6 ein Festlegen des Verbindungsbahnsegments 28 nach Maßgabe der bestimmten Verbindungsfunktionen 42, 44 und insbesondere nach Maßgabe der Rückzugsfunktion 50. Mithin ergibt sich anders als im Fall des oben beschriebenen ersten Verbindungsbahnsegments 128, aus dem die Achsbewegungen berechnet werden, Verbindungsbahnsegment 28 durch entsprechende Berechnung aus den Bewegungen in den Maschinenachsen X, Y, Z, A, C. Eine Verbindung zwischen den Eingriffsbahnsegmenten 25, 26 wird also in den Maschinenachsen X, Y, Z, A, C berechnet.

In einem Schritt S7 wird dann die Bearbeitungsbahn 24 festgelegt. Es versteht sich, dass die Bearbeitungsbahn 24 mehrere Eingriffsbahnsegmente 25, 26 und mehrere Verbindungsbahnsegmente 28 umfassen kann. Das Verfahren wird dann wie beschrieben für mehrere Verbindungsbahnsegmente 28 durchgeführt.

In einigen Ausführungsformen kann das Verfahren ein iteratives Bestimmen des Verbindungsbahnsegments 28 umfassen, was in Fig. 5 durch den gestrichelten Pfeil veranschaulicht ist. Für unterschiedliche Iterationen wird dabei basierend auf jeweils einer anderen Interpolationsgruppe jeweils eine Kollisionsprüfung durchgeführt. Beispielsweise wird zunächst die Z-Achse als Rückzugsachse verwendet. In einer nächsten Iteration wird dann die X-Achse als Rückzugsachse verwendet etc., wobei beliebige Reihenfolgen vorgesehen sein können. Eine Entscheidung für eine bestimmte Interpolationsgruppe bzw. eines sich hierzu im Rahmen der Iterationen ergebenden bestimmten Verbindungsbahnsegments kann dann beispielsweise anhand einer kürzesten erforderlichen Zeit, einer geringsten erforderlichen Energie, eine kürzesten Länge des Verbindungsbahnsegments etc. getroffen werden. Ferner kann auch vorgesehen sein, dass dem Benutzer unterschiedliche mögliche Verbindungsbahnsegmente angezeigt werden, von denen dieser das bevorzugte auswählt.

Die Interpolation in den Maschinenachsen kann dazu führen, dass die Bearbeitungsbahn 24 in dem Verbindungsbahnsegment 28 und/oder an Übergängen zwischen dem Verbindungsbahnsegment 28 und zumindest einem der Eingriffsbahnsegmente 25, 26 tangentenunstetig und/oder krümmungsunstetig ist. Die Erfindung legt diesbezüglich größeren Wert auf die Ausgestaltung der Funktionen, die die Bewegung in den einzelnen Maschinenachsen beschreiben.

Das in Fig. 1 dargestellte CAM-System umfasst ein Computerprogrammprodukt 54, das ein Speichermedium umfasst, auf dem Software zur Durchführung des beschriebenen Verfahrens gespeichert ist. Das Computerprogrammprodukt 54 kann auch unabhängig von einem CAM-System ausgebildet sein und beispielsweise einen portablen Datenträger oder Speicherplatz auf einem Server umfassen. Die Software umfasst Programmcode, der zur Implementierung der erläuterten Verfahrensschritte eingerichtet ist.

Mit Bezug auf Fig. 10 wird im Folgenden ein Verfahren zur Bearbeitung des Werkstücks 14 beschrieben. Dieses beruht auf der Verwendung der Bearbeitungsbahn 24, die wie erläutert festgelegt wurde.

In einem Schritt S11 wird die Bearbeitungsbahn 24 erzeugt. Der Schritt S11 kann entsprechend das mit Bezug auf Fig. 5 beschriebene Verfahren umfassen.

In einem Schritt S12 erfolgt ein bedarfsweises Postprocessing, um aus der Bearbeitungsbahn 24 Steuerbefehle zur Ansteuerung der Bearbeitungsmaschine 10 zu gewinnen.

In einem Schritt S13 wird das Werkstück 14 bearbeitet, indem das Werkzeug 18 entlang des ersten Eingriffsbahnsegments 25 bewegt wird.

In einem Schritt S14 wird das Werkzeug entlang des Verbindungsbahnsegments 28 bewegt. Hierfür werden Bewegungen in den Maschinenachsen X, Y, Z, A, C derart erzeugt, dass in einer der Maschinenachsen (im obigen Beispiel: Z) ein Zurückbewegen und ein anschließendes Vorbewegen des Werkzeugs 18 erfolgt, und dass in den anderen Maschinenachsen (im obigen Beispiel: X, Y, A, C) jeweils eine Bewegung erzeugt wird, deren Bewegungsrichtung beim Abfahren des Verbindungsbahnsegments 28 beibehalten oder höchstens in unwesentlichem Umfang vorübergehend umgekehrt wird.

In einem Schritt S15 wird das Werkstück 14 bearbeitet, indem das Werkzeug 18 entlang des zweiten Eingriffsbahnsegments 26 bewegt wird.

Es versteht sich, dass eine Bezugnahme auf einen Rückzug oder ein Zurückziehen im Rahmen dieser Offenbarung generell eine beliebige Zurückbewegung umfasst. Diese kann im Fall einer Drehachse auch ein Zurückdrehen sein.

## Patentansprüche

1. Verfahren zum Bestimmen einer Bearbeitungsbahn (24) für eine materialabtragende Bearbeitung eines Werkstücks (14) mittels einer mehrachsigen Bearbeitungsmaschine (10), wobei aus der Bearbeitungsbahn (24) computergestützt Steuerbefehle zur Ansteuerung einer Anzahl von N unterschiedlichen Maschinenachsen (X, Y, Z, A, C) einer Bearbeitungsmaschine (10) erzeugbar sind, nach deren Maßgabe ein Werkzeug (18), insbesondere ein Fräswerkzeug, kontinuierlich entlang der Bearbeitungsbahn (24) bewegbar ist,
wobei die Bearbeitungsbahn (24) ein erstes Eingriffsbahnsegment (25) und ein zweites Eingriffsbahnsegment (26) umfasst, entlang derer sich das Werkzeug (18) mit dem Werkstück (14) zumindest abschnittsweise in Eingriff befindet, und wobei die Bearbeitungsbahn (24) ferner ein Verbindungsbahnsegment (28) umfasst, entlang dessen das Werkzeug (18) außer Eingriff mit dem Werkstück (14) steht und das einen Endpunkt (30) des ersten Eingriffsbahnsegments (26) stetig und bezüglich des Werkstücks (14) kollisionsfrei mit einem Startpunkt (32) des zweiten Eingriffsbahnsegments (26) verbindet;
wobei das Verfahren umfasst:
- Festlegen einer Interpolationsgruppe von Maschinenachsen, die wenigstens eine und höchstens N-1 der N Maschinenachsen (X, Y, Z, A, C) umfasst;
- Bestimmen, für die Maschinenachsen der Interpolationsgruppe, eines jeweiligen Interpolationsstartpunkts (34, 36, 37, 39), der durch den Endpunkt (30) des ersten Eingriffsbahnsegments (25) bezogen auf die jeweilige Maschinenachse (X, Y, Z, A, C) definiert ist;
- Bestimmen, für die Maschinenachsen der Interpolationsgruppe, eines jeweiligen Interpolationsendpunkts (38, 40, 41, 43), der durch den Startpunkt (32) des zweiten Eingriffsbahnsegments (26) bezogen auf die jeweilige Maschinenachse (X, Y, Z, A, C) definiert ist;
- Bestimmen, für die Maschinenachsen der Interpolationsgruppe, jeweils einer Verbindungsfunktion (42, 44, 45, 47) zwischen dem jeweiligen Interpolationsstartpunkt (34, 36, 37, 39) und dem jeweiligen Interpolationsendpunkt (38, 40, 41, 43) durch Interpolation bezogen auf die jeweilige Maschinenachse (X, Y, Z, A, C), wobei das Interpolieren derart durchgeführt wird, dass die Verbindungsfunktion (42, 44, 45, 47) für jede der Maschinenachsen der Interpolationsgruppe eine monotone Funktion ist;
- Festlegen des Verbindungsbahnsegments (28) nach Maßgabe der bestimmten Verbindungsfunktionen (42, 44, 45, 47); und
- Festlegen der Bearbeitungsbahn (24) unter Verwendung des bestimmten Verbindungsbahnsegments (28),
wobei für zumindest eine der Maschinenachsen, die nicht zu der Interpolationsgruppe gehört, zwischen dem Endpunkt (30) des ersten Eingriffsbahnsegments (25) und dem Startpunkt (32) des zweiten Eingriffsbahnsegments (26) eine kollisionsvermeidende nicht-monotone Interpolation durchgeführt wird.

2. Verfahren nach Anspruch 1,
ferner umfassend:
- Bestimmen einer der N Maschinenachsen (X, Y, Z, A, C), die nicht zu der Interpolationsgruppe gehört, als Rückzugsmaschinenachse, wobei die Rückzugsachse insbesondere eine Linearachse ist und/oder wobei die Rückzugsachse insbesondere eine Drehachse ist;
- Bestimmen, für die Rückzugsmaschinenachse, eines Rückzugsstartpunkts (46), der durch den Endpunkt (30) des ersten Eingriffsbahnsegments (25) bezogen auf die Rückzugsachse definiert ist;
- Bestimmen, für die Rückzugsmaschinenachse, eines Rückzugsendpunkts (48), der durch den Startpunkt (32) des zweiten Eingriffsbahnsegments (26) bezogen auf die Rückzugsmaschinenachse definiert ist; und
- Bestimmen, für die Rückzugsmaschinenachse, einer Rückzugsfunktion (50), die zwischen dem Rückzugsstartpunkt (46) und dem Rückzugsendpunkt (48) unter Berücksichtigung einer Geometrie des Werkstücks (14) derart verläuft, dass das Werkzeug (18) bei einer Bewegung entlang der Verbindungsbahn (28) zunächst bezüglich der Rückzugsmaschinenachse derart zurückbewegt und anschließend wieder vorbewegt wird, dass in Kombination mit der einen oder den mehreren Verbindungsfunktionen (42, 44), die für die Interpolationsgruppe bestimmt wurden, eine Kollision mit dem Werkstück (14) vermieden wird,
wobei die Rückzugsfunktion insbesondere als stetige, vorzugsweise tangentenstetige und besonders bevorzugt krümmungsstetige, Funktion mit einem einzelnen Extremum bestimmt wird.

3. Verfahren nach Anspruch 2,
wobei die Rückzugsachse eine Maschinenachse (X, Y, Z, A, C) der Bearbeitungsmaschine (10) ist, die unter den Maschinenachsen (X, Y, Z, A, C) über das größte Beschleunigungsvermögen und/oder über die größte Maximalgeschwindigkeit verfügt.

4. Verfahren nach Anspruch 2 oder 3,
wobei das Bestimmen der Rückzugsmaschinenachse auf einer Benutzervorgabe beruht.

5. Verfahren nach einem der vorhergehenden Ansprüche,
wobei das Bestimmen der Interpolationsgruppe auf einer Benutzervorgabe beruht und/oder
wobei die Interpolationsgruppe genau N-1 der N Maschinenachsen (X, Y, Z, A, C) umfasst, wobei N insbesondere wenigstens 5 ist.

6. Verfahren nach einem der vorhergehenden Ansprüche,
wobei die Verbindungsfunktion (42, 44, 45, 47) insofern eine monotone Funktion ist, dass für eine Referenzfunktion (52), die eine monotone Funktion ist, die den jeweiligen Interpolationsstartpunkt (34, 36, 37, 39) mit dem jeweiligen Interpolationsendpunkt (38, 40, 41, 43) verbindet und für die eine maximale Abweichung von der Verbindungsfunktion (42, 44, 45, 47) minimal ist, die maximale Abweichung zwischen der Verbindungsfunktion (42, 44, 45, 47) und der Referenzfunktion (52) kleiner als 20 %, vorzugsweise kleiner als 10 % und besonders bevorzugt kleiner als 5 % eines Abstands zwischen dem Interpolationsstartpunkt (34, 36, 37, 39) und dem Interpolationsendpunkt (38, 40, 41, 43) bezogen auf die jeweilige Maschinenachse (X, Y, Z, A, C) ist.

7. Verfahren nach einem der vorhergehenden Ansprüche,
wobei das Verbindungsbahnsegment (28) iterativ bestimmt wird, indem für unterschiedliche Iterationen basierend auf jeweils einer anderen Interpolationsgruppe jeweils eine Kollisionsprüfung durchgeführt wird und/oder
wobei die jeweilige Verbindungsfunktion (42, 44, 45, 47) zumindest abschnittsweise durch lineare Interpolation bestimmt werden.

8. Verfahren nach einem der vorhergehenden Ansprüche,
wobei die jeweilige Verbindungsfunktion (42, 44, 45, 47) stufig und/oder S-Kurven-förmig ist und/oder
wobei die Bearbeitungsbahn (24) in dem Verbindungsbahnsegment (28) und/oder an Übergängen zwischen dem Verbindungsbahnsegment (28) und zumindest einem der Eingriffsbahnsegmente (25, 26) tangentenunstetig und/oder krümmungsunstetig ist.

9. Verfahren nach einem der Ansprüche 1 bis 8, sofern auf Anspruch 2 rückbezogen, wobei das Festlegen des Verbindungsbahnsegments (28) ferner nach Maßgabe der Rückzugsfunktion (50) erfolgt.

10. Software umfassend Programmcode umfassend Befehle, die bei Ausführung durch einen Computer diesen veranlassen, die Schritte des Verfahrens nach einem der vorhergehenden Ansprüche auszuführen.

11. Computerprogrammprodukt (54), umfassend zumindest ein Speichermedium, auf dem die Software nach Anspruch 10 gespeichert ist.

12. Verfahren zur Bearbeitung eines Werkstücks (14) mittels einer mehrachsigen Bearbeitungsmaschine (10), die unterschiedliche Maschinenachsen (X, Y, Z, A, C) aufweist und die dazu eingerichtet ist, ein Werkstück (14) mittels eines Werkzeugs (18), insbesondere eines Fräswerkzeugs, durch Bewegen des Werkzeugs (18) entlang einer Bearbeitungsbahn (24) zu bearbeiten,
wobei die Bearbeitungsbahn (24) gemäß einem Verfahren nach einem der Ansprüche 1 bis 9 bestimmt wurde oder wird.

## Claims

1. A method for determining a machining path (24) for material-removing machining of a workpiece (14) by means of a multi-axis machine tool (10), wherein computer-aided control commands for controlling a number of N different machine axes (X, Y, Z, A, C) of a machine tool (10) can be generated from the machining path (24), according to which a tool (18), in particular a milling tool, can be moved continuously along the machining path (24),
wherein the machining path (24) comprises a first engagement path segment (25) and a second engagement path segment (26) along which the tool (18) engages with the workpiece (14) at least in sections, and wherein the machining path (24) further comprises a connecting path segment (28) along which the tool (18) does not engage with the workpiece (14) and which connects an end point (30) of the first engagement path segment (26) to a starting point (32) of the second engagement path segment (26) continuously and collision-free with the workpiece (14);
the method comprising:
- defining an interpolation group of machine axes comprising at least one and no more than N-1 of the N machine axes (X, Y, Z, A, C);
- determining, for the machine axes of the interpolation group, a respective interpolation starting point (34, 36, 37, 39) defined by the end point (30) of the first engagement path segment (25) relative to the respective machine axis (X, Y, Z, A, C);
- determining, for the machine axes of the interpolation group, a respective interpolation end point (38, 40, 41, 43) defined by the starting point (32) of the second engagement path segment (26) relative to the respective machine axis (X, Y, Z, A, C);
- determining, for the machine axes of the interpolation group, a respective link function (42, 44, 45, 47) between the respective interpolation starting point (34, 36, 37, 39) and the respective interpolation end point (38, 40, 41, 43) by interpolation with respect to the respective machine axis (X, Y, Z, A, C), wherein interpolating is performed such that the link function (42, 44, 45, 47) for each of the machine axes of the interpolation group is a monotonic function;
- defining the connecting path segment (28) in accordance with the determined link functions (42, 44, 45, 47); and
- defining the machining path (24) using the determined connecting path segment (28),
wherein, for at least one of the machine axes that does not belong to the interpolation group, collision-avoiding non-monotonic interpolation is performed between the end point (30) of the first engagement path segment (25) and the starting point (32) of the second engagement path segment (26).

2. The method of claim 1,
further comprising:
- determining one of the N machine axes (X, Y, Z, A, C) not belonging to the interpolation group as the retraction machine axis, wherein the retraction axis is in particular a linear axis and/or wherein the retraction axis is in particular a rotary axis;
- determining, for the retraction machine axis, a retraction starting point (46) defined by the end point (30) of the first engagement path segment (25) relative to the retraction axis;
- determining, for the retraction machine axis, a retraction end point (48) defined by the starting point (32) of the second engagement path segment (26) relative to the retraction machine axis; and
- determining, for the retraction machine axis, a retraction function (50) extending between the retraction starting point (46) and the retraction end point (48), taking into account a geometry of the workpiece (14) such that, when moving along the connecting path (28), the tool (18) is first moved back with respect to the retraction machine axis and subsequently moved forward again in a way that, in combination with the one or more link functions (42, 44) determined for the interpolation group, a collision with the workpiece (14) is avoided,
wherein the retraction function is in particular determined as a continuous, preferably tangent-continuous, and particularly preferably curvature-continuous function having a single extremum.

3. The method of claim 2,
wherein the retraction axis is a machine axis (X, Y, Z, A, C) of the machine tool (10) having the highest acceleration capability and/or the highest maximum speed among the machine axes (X, Y, Z, A, C).

4. The method of claim 2 or 3,
wherein determining the retraction machine axis is based on a user specification.

5. The method of any one of the preceding claims,
wherein determining the interpolation group is based on a user specification, and/or
wherein the interpolation group comprises exactly N-1 of the N machine axes (X, Y, Z, A, C), where N is in particular at least 5.

6. The method of any one of the preceding claims,
wherein the link function (42, 44, 45, 47) is a monotonic function in that, for a reference function (52) which is a monotonic function connecting the respective interpolation starting point (34, 36, 37, 39) to the respective interpolation end point (38, 40, 41, 43) and for which a maximum deviation from the link function (42, 44, 45, 47) is minimal, the maximum deviation between the link function (42, 44, 45, 47) and the reference function (52) is smaller than 20%, preferably smaller than 10%, and particularly preferably smaller than 5% of a distance between the interpolation starting point (34, 36, 37, 39) and the interpolation end point (38, 40, 41, 43) with respect to the respective machine axis (X, Y, Z, A, C).

7. The method of any one of the preceding claims,
wherein the connecting path segment (28) is determined iteratively by performing a collision check for different iterations based on a respective other interpolation group in each case, and/or
wherein the respective link function (42, 44, 45, 47) is determined at least in sections by linear interpolation.

8. The method of any one of the preceding claims,
wherein the respective link function (42, 44, 45, 47) is stepped and/or S-bend-shaped, and/or
wherein the machining path (24) is tangent-discontinuous and/or curvature-discontinuous in the connecting path segment (28) and/or at transitions between the connecting path segment (28) and at least one of the engagement path segments (25, 26).

9. The method of any one of claims 1 to 8, insofar as dependent on claim 2, wherein the definition of the connecting path segment (28) is further performed in accordance with the retraction function (50).

10. A software comprising program code comprising instructions that, when executed by a computer, cause the computer to perform the steps of the method of any one of the preceding claims.

11. A computer program product (54) comprising at least one storage medium on which the software of claim 10 is stored.

12. A method for machining a workpiece (14) by means of a multi-axis machine tool (10) which comprises different machine axes (X, Y, Z, A, C) and which is adapted to machine a workpiece (14) by means of a tool (18), in particular a milling tool, by moving the tool (18) along a machining path (24),
wherein the machining path (24) was or is determined according to a method of any one of claims 1 to 9.

## Revendications

1. Procédé pour déterminer une trajectoire d'usinage (24) pour un usinage par enlèvement de matière d'une pièce (14) à l'aide d'une machine d'usinage multi-axes (10), dans lequel des instructions de commande pour piloter un nombre N d'axes de machine différents (X, Y, Z, A, C) d'une machine d'usinage (10) peuvent être générées par ordinateur à partir de la trajectoire d'usinage (24), sur la base desquelles un outil (18), en particulier un outil de fraisage, peut être déplacé de manière continue le long de la trajectoire d'usinage (24),
dans lequel la trajectoire d'usinage (24) comprend un premier segment de trajectoire d'engagement (25) et un deuxième segment de trajectoire d'engagement (26) le long desquels l'outil (18) est en engagement avec la pièce (14) au moins par sections, et la trajectoire d'usinage (24) comprend en outre un segment de trajectoire de liaison (28) le long duquel l'outil (18) est désengagé de la pièce (14) et qui relie de manière continue et sans collision par rapport à la pièce (14) un point final (30) du premier segment de trajectoire d'engagement (26) à un point de départ (32) du deuxième segment de trajectoire d'engagement (26) ;
le procédé comprenant :
- la définition d'un groupe d'interpolation d'axes de machine qui comprend au moins un et au plus N-1 des N axes de machine (X, Y, Z, A, C) ;
- la détermination, pour les axes de machine du groupe d'interpolation, d'un point de départ d'interpolation respectif (34, 36, 37, 39) défini par le point final (30) du premier segment de trajectoire d'engagement (25) par rapport à l'axe de machine respectif (X, Y, Z, A, C) ;
- la détermination, pour les axes de machine du groupe d'interpolation, d'un point final d'interpolation respectif (38, 40, 41, 43) défini par le point de départ (32) du deuxième segment de trajectoire d'engagement (26) par rapport à l'axe de machine respectif (X, Y, Z, A, C) ;
- la détermination, pour chacun des axes de machine du groupe d'interpolation, d'une fonction de liaison (42, 44, 45, 47) entre le point de départ d'interpolation respectif (34, 36, 37, 39) et le point final d'interpolation respectif (38, 40, 41, 43) par interpolation par rapport à l'axe de machine correspondant (X, Y, Z, A, C), l'interpolation étant effectuée de telle sorte que la fonction de liaison (42, 44, 45, 47) soit une fonction monotone pour chacun des axes de machine du groupe d'interpolation ;
- la définition du segment de trajectoire de liaison (28) sur la base des fonctions de liaison déterminées (42, 44, 45, 47) ; et
- la définition de la trajectoire d'usinage (24) en utilisant le segment de trajectoire de liaison déterminé (28),
dans lequel une interpolation non monotone évitant les collisions est effectuée, pour au moins l'un des axes de machine qui n'appartient pas au groupe d'interpolation, entre le point final (30) du premier segment de trajectoire d'engagement (25) et le point de départ (32) du deuxième segment de trajectoire d'engagement (26).

2. Procédé selon la revendication 1,
comprenant en outre :
- la détermination de l'un des N axes de machine (X, Y, Z, A, C), qui n'appartient pas au groupe d'interpolation, en tant qu'axe de machine de retrait, l'axe de retrait étant en particulier un axe linéaire et/ou l'axe de retrait étant en particulier un axe de rotation ;
- la détermination, pour l'axe de machine de retrait, d'un point de départ de retrait (46) défini par le point final (30) du premier segment de trajectoire d'engagement (25) par rapport à l'axe de retrait ;
- la détermination, pour l'axe de machine de retrait, d'un point final de retrait (48) défini par le point de départ (32) du deuxième segment de trajectoire d'engagement (26) par rapport à l'axe de machine de retrait ; et
- la détermination, pour l'axe de machine de retrait, d'une fonction de retrait (50) qui s'étend entre le point de départ de retrait (46) et le point final de retrait (48), en tenant compte de la géométrie de la pièce (14), de telle sorte que l'outil (18), lors d'un déplacement le long de la trajectoire de liaison (28), soit d'abord reculé puis à nouveau avancé par rapport à l'axe de machine de retrait, de manière à éviter, en combinaison avec la ou les fonctions de liaison (42, 44) qui ont été déterminées pour le groupe d'interpolation, une collision avec la pièce (14),
dans lequel la fonction de retrait est en particulier déterminée comme une fonction continue, de préférence tangentiellement continue et, de manière particulièrement préférée, continue en courbure, présentant un seul extremum.

3. Procédé selon la revendication 2,
dans lequel l'axe de retrait est un axe de machine (X, Y, Z, A, C) de la machine d'usinage (10) qui, parmi les axes de machine (X, Y, Z, A, C), dispose de la plus grande capacité d'accélération et/ou de la vitesse maximale la plus élevée.

4. Procédé selon les revendications 2 ou 3,
dans lequel la détermination de l'axe de machine de retrait repose sur une entrée de l'utilisateur.

5. Procédé selon l'une des revendications précédentes,
dans lequel la détermination du groupe d'interpolation repose sur une entrée de l'utilisateur et/ou
dans lequel le groupe d'interpolation comprend exactement N-1 des N axes de machine (X, Y, Z, A, C), N étant en particulier au moins égal à 5.

6. Procédé selon l'une des revendications précédentes,
dans lequel la fonction de liaison (42, 44, 45, 47) est une fonction monotone en ce sens que, pour une fonction de référence (52) qui est une fonction monotone qui relie le point de départ d'interpolation respectif (34, 36, 37, 39) au point final d'interpolation respectif (38, 40, 41, 43) et pour laquelle un écart maximal par rapport à la fonction de liaison (42, 44, 45, 47) est minimal, l'écart maximal entre la fonction de liaison (42, 44, 45, 47) et la fonction de référence (52) est inférieur à 20 %, de préférence inférieur à 10 % et, de manière particulièrement préférée, inférieur à 5 % d'une distance entre le point de départ d'interpolation (34, 36, 37, 39) et le point final d'interpolation (38, 40, 41, 43), par rapport à l'axe de machine respectif (X, Y, Z, A, C).

7. Procédé selon l'une des revendications précédentes,
dans lequel le segment de trajectoire de liaison (28) est déterminé de manière itérative en effectuant, pour différentes itérations basées chacune sur un groupe d'interpolation différent, un contrôle de collision respectif et/ou
dans lequel la fonction de liaison respective (42, 44, 45, 47) est déterminée, au moins par sections, par interpolation linéaire.

8. Procédé selon l'une des revendications précédentes,
dans lequel la fonction de liaison respective (42, 44, 45, 47) est étagée et/ou en forme de courbe en S et/ou
dans lequel la trajectoire d'usinage (24) est tangentiellement discontinue et/ou discontinue en courbure dans le segment de trajectoire de liaison (28) et/ou au niveau des transitions entre le segment de trajectoire de liaison (28) et au moins l'un des segments de trajectoire d'engagement (25, 26).

9. Procédé selon l'une des revendications 1 à 8, dans la mesure où il est fait référence à la revendication 2, dans lequel la définition du segment de trajectoire de liaison (28) s'effectue en outre sur la base de la fonction de retrait (50).

10. Logiciel comprenant un code de programme comprenant des instructions qui, lorsqu'elles sont exécutées par un ordinateur, amènent celui-ci à exécuter les étapes du procédé selon l'une des revendications précédentes.

11. Produit logiciel (54) comprenant au moins un support de stockage sur lequel est stocké le logiciel selon la revendication 10.

12. Procédé d'usinage d'une pièce (14) à l'aide d'une machine d'usinage multiaxes (10) qui présente différents axes de machine (X, Y, Z, A, C) et qui est conçue pour usiner une pièce (14) à l'aide d'un outil (18), en particulier d'un outil de fraisage, en déplaçant l'outil (18) le long d'une trajectoire d'usinage (24),
dans lequel la trajectoire d'usinage (24) a été ou est déterminée conformément à un procédé selon l'une des revendications 1 à 9.
